Europäisches Patentamt

European Patent Office

Office européen des brevets

(19)

(11) Numéro de publication : **0 124 429**
**B1**

(12)

# FASCICULE DE BREVET EUROPÉEN

(45) Date de publication du fascicule du brevet :
15.03.89

(21) Numéro de dépôt : **84400814.4**

(22) Date de dépôt : **20.04.84**

(51) Int. Cl.⁴ : **F 16 L 23/00, F 16 L 19/02**

(54) Dispositif de raccordement étanche.

(30) Priorité : **27.04.83 FR 8306962**

(43) Date de publication de la demande :
**07.11.84 Bulletin 84/45**

(45) Mention de la délivrance du brevet :
**15.03.89 Bulletin 89/11**

(84) Etats contractants désignés :
**BE CH DE GB IT LI SE**

(56) Documents cités :
**EP--A-- 0 043 593**
**CH--A-- 348 297**
**FR--A-- 1 217 013**
**FR--A-- 1 507 450**
**FR--A-- 2 206 827**
**GB--A-- 745 847**
**GB--A-- 928 699**
**GB--A-- 1 112 421**
**US--A-- 2 023 060**
**US--A-- 3 216 745**

(73) Titulaire : **COMMISSARIAT A L'ENERGIE ATOMIQUE**
**31/33, rue de la Fédération**
**F-75015 Paris (FR)**

(72) Inventeur : **Abbes, Claude**
**5 Chemin du Crêt du Loup**
**F-42000 Saint Etienne (FR)**
Inventeur : **Rouaud, Christian**
**Les Genêts**
**F-07700 Bourg Saint Andeol (FR)**
Inventeur : **Valla, Jean**
**15, rue de la Richelandière**
**F-42000 Saint Etienne (FR)**
Inventeur : **Forges, Robert**
**Avenue Achille Maucuer Les Charagons**
**F-84500 Bollene (FR)**
Inventeur : **de Villepoix, Raymond**
**La Chatelière**
**F-26290 Donzere (FR)**

(74) Mandataire : **Mongrédien, André et al**
**c/o BREVATOME 25, rue de Ponthieu**
**F-75008 Paris (FR)**

## Description

L'invention se rapporte à un dispositif de raccordement étanche d'une première tuyauterie à une seconde tuyauterie.

Plus précisément, l'invention se rapporte à un dispositif de raccordement étanche qui comporte les caractéristiques du préambule de la revendication 1.

On connaît déjà (FR-A-1 217 013) un dispositif de raccordement de ce type. Chaque tuyauterie est terminée par une surface conique de faible conicité. Des plaques présentent un cône inférieur qui s'adapte aux surfaces coniques. Les plaques sont munies de trous pour des boulons de serrage. Un collier de serrage à section en U agit sur les surfaces extérieures coniques des colliers coopérants respectifs de manière à pousser l'une vers l'autre de façon étanche les deux extrémités des tuyauteries. Chaque collier est serré par un moyen tel qu'une vis, un mécanisme de blocage à genouillère ou une pince à dégagement rapide.

Cependant, un dispositif de serrage de ce type ne permet pas d'assurer un effort de serrage important. Or, dans l'industrie, pour assurer les liaisons des canalisations, l'emploi de raccordements avec joint statique demande des efforts de serrage souvent importants, pour obtenir des performances de haute étanchéité et de grande fiabilité.

Par ailleurs, pour simplifier ou automatiser le serrage, il est souvent fait appel à un moyen mécanique, genre vérin hydraulique ou électrique, pour serrer l'assemblage et écraser le joint d'étanchéité conformément aux spécifications de montage. Cela permet de simplifier la fermeture du système de serrage parce qu'aucun effort n'est exercé sur celui-ci. Par exemple, si ce système de serrage est une boulonnerie, les boulons peuvent être vissés à la main. Ceci est particulièrement intéressant dans le cas où il n'y a pas la place d'introduire un organe de serrage tel qu'une clef de serrage. Dans ce cas, avant de supprimer l'action du vérin, il faut, par un système adapté, précontraindre l'assemblage afin de le maintenir correctement serré. Ceci sera obtenu par la mise en tension du moyen de verrouillage, faute de quoi la réaction élastique du joint d'étanchéité provoquerait son délestage.

Pour simuler ce problème de maintien de l'effort, il suffit de modéliser les deux éléments élastiques que sont le joint et le système de serrage par deux ressorts A et B.

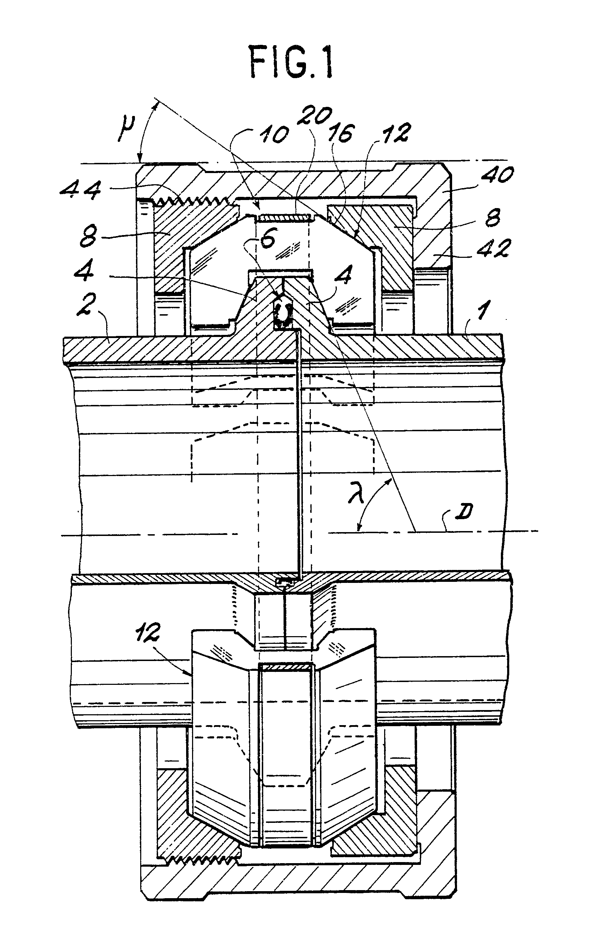

La figure 1a montre un système élastique comprenant deux ressorts A et B. Le ressort A joue le rôle de l'élasticité du joint d'étanchéité et le ressort B celui de l'élasticité du système de serrage. On comprime le ressort A en agissant avec une force F sur la plaque p.

On bloque la plaque q sur l'axe r, par exemple au moyen d'une vis v, de façon que le ressort B ne soit pas comprimé. En effet, si l'on prend l'exemple d'une boulonnerie, si les boulons sont serrés à la main, on conçoit aisément qu'ils ne puissent être serrés fortement.

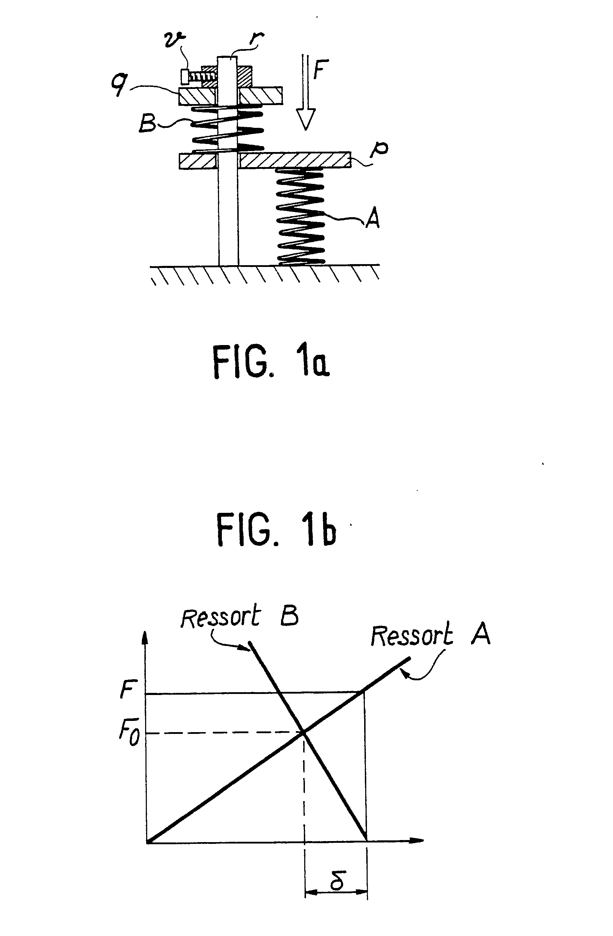

Si on relâche l'effort F, exercé par exemple par un vérin, la réaction de ressort sur la plaque p, qui était jusqu'alors équilibrée par l'action du vérin, est transmise au ressort B qui est comprimé. Le point d'équilibre s'effectue en $F_0$ (voir figure 1b). Le ressort B représente l'élasticité de la boulonnerie équivalente à : $F-F_0$. Le ressort A est détendu de la valeur $\delta$ et le ressort B comprimé de la même valeur $\delta$. A la lumière de ce qui précède, on voit que le joint d'étanchéité dont l'élasticité est représentée par le ressort A, s'est détendu. Or, pour que l'étanchéité soit assurée de manière correcte, il est nécessaire que le joint soit suffisamment comprimé.

Pour éviter ce phénomène de délestage du joint d'étanchéité, il est nécessaire, comme on l'a dit précédemment, de précontraindre le système de serrage par sa mise sous tension. Mais ceci ne peut pas être fait dans tous les cas, en particulier pour des raisons de manque de place.

La présente invention a pour but un dispositif de raccordement étanche qui permet de diminuer considérablement l'effort de serrage à appliquer au niveau de l'assemblage.

Par ailleurs, il permet également de supprimer la mise en tension du moyen de verrouillage lorsqu'on utilise un vérin pour serrer le raccordement.

Ces avantages sont obtenus grâce à la présence d'un système mécanique permettant de démultiplier l'effort de serrage et d'augmenter fortement le déplacement des éléments de serrage par rapport au déplacement des flasques comprimant le joint d'étanchéité.

De façon plus précise, le dispositif de raccordement étanche de l'invention comporte les caractéristiques qui figurent dans la partie caractérisante de la revendication 1.

Les avantages obtenus grâce à la présente invention sont les suivants :

Le dispositif de serrage démultiplie l'effort de serrage, ce qui permet d'exercer l'effort de serrage important qui est nécessaire dans certaines applications industrielles pour obtenir des performances de haute étanchéité et de grande fiabilité.

Par ailleurs, il augmente fortement le déplacement des éléments de serrage par rapport au déplacement des flasques comprimant le joint d'étanchéité. Ceci permet, dans le cas où l'on utilise un moyen de verrouillage tel qu'un vérin pour serrer le raccordement, de ne pas avoir à mettre le système de serrage sous tension. En effet, le déplacement de la bride de serrage du joint, par suite de l'élasticité du système de serrage, restera dans des limites acceptables pour les performances du joint.

L'invention est exposée ci-après plus en détail à l'aide de dessins représentant seulement des exemples de réalisation.

— la figure 1 représente une vue en coupe longitudinale d'un dispositif de raccordement étanche conforme à la présente invention ;

— la figure 2 est une vue latérale d'une première réalisation d'une couronne faisant partie d'un dispositif de raccordement étanche réalisé conformément à l'invention ;

— la figure 3 est une vue latérale, et représente schématiquement une deuxième réalisation d'une couronne faisant partie d'un dispositif de raccordement de l'invention ;

— la figure 4 est une vue en coupe selon la ligne IV-IV de la couronne représentée sur la figure 3 ;

— la figure 5 est une vue en coupe d'une troisième réalisation d'une couronne faisant partie d'un dispositif de raccordement conforme à l'invention ;

— la figure 6 est une vue de détail montrant une partie de la couronne représentée sur la figure 5 ;

— la figure 7 illustre une première réalisation des moyens de serrage du dispositif de raccordement de l'invention ;

— les figures 8A et 8B illustrent le serrage des flasques au moyen de vérins ; la figure 8a est une vue en coupe du dispositif de raccordement et la figure 8b une vue de ce même mécanisme selon la flèche F de la figure 8A ;

— la figure 9 illustre le montage du dispositif de raccordement représenté sur la figure 1 ;

— les figures 10 et 11 sont des vues de détail qui montrent une variante de réalisation des surfaces coniques des flasques de serrage (figure 10) ou de la couronne (figure 11).

Le dispositif de raccordement étanche représenté sur la figure 1 permet de raccorder une première pièce 1 à une seconde pièce 2. Les pièces 1 et 2 sont par exemple constituées par des tuyauteries d'axe longitudinal D.

Dans le cas où ces tuyauteries véhiculent un liquide très corrosif, il est nécessaire de recourir, pour les raccorder de façon étanche, à un joint entièrement métallique qui nécessite un effort de serrage important. Le dispositif de raccordement de l'invention permet de diminuer considérablement l'effort de serrage à appliquer au niveau de l'assemblage.

Chaque tuyauterie comporte un flasque 4. Chaque flasque présente une surface conique d'axe D, d'angle $\lambda$. L'angle $\lambda$ est un angle aigu proche de 90°, par exemple 75°. L'extrémité de la canalisation 2 vient s'emboîter dans un logement pratiqué dans le flasque 4 de la tuyauterie 1. Sur le pourtour extérieur de la tuyauterie 1 est monté un joint d'étanchéité 6. Comme on l'a expliqué précédemment, le joint d'étanchéité 6 est un joint entièrement métallique qui requiert un effort de compression important selon la direction longitudinale D des tuyauteries 1 et 2.

Le dispositif de raccordement proprement dit comporte deux brides de serrage 8 qui présentent chacune une surface conique d'axe D et d'angle $\mu$. L'angle $\mu$ est un angle faible, par exemple de 15°. Chaque bride de serrage 8 se présente sous la forme d'une couronne circulaire dont le diamètre intérieur est supérieur à celui des tuyauteries 1 et 2. Entre les brides de serrage 8 et chacun des flasques 4 est interposé un élément intermédiaire 10. Cet élément intermédiaire se présente sous la forme d'une couronne extensible et rétractable. A cette fin, la couronne 10 est composée de plusieurs segments 12. Chaque segment 12 comporte une surface périphérique intérieure et une surface périphérique extérieure. La surface périphérique intérieure de chaque segment 12 comporte une surface conique d'axe D et d'angle $\lambda$ destinée à coopérer avec les surfaces coniques correspondantes des flasques 4. La surface périphérique extérieure des segments 12 comporte une surface conique 16, d'axe D et d'angle $\mu$, apte à coopérer avec les surfaces coniques d'angle $\mu$ des brides de serrage 8.

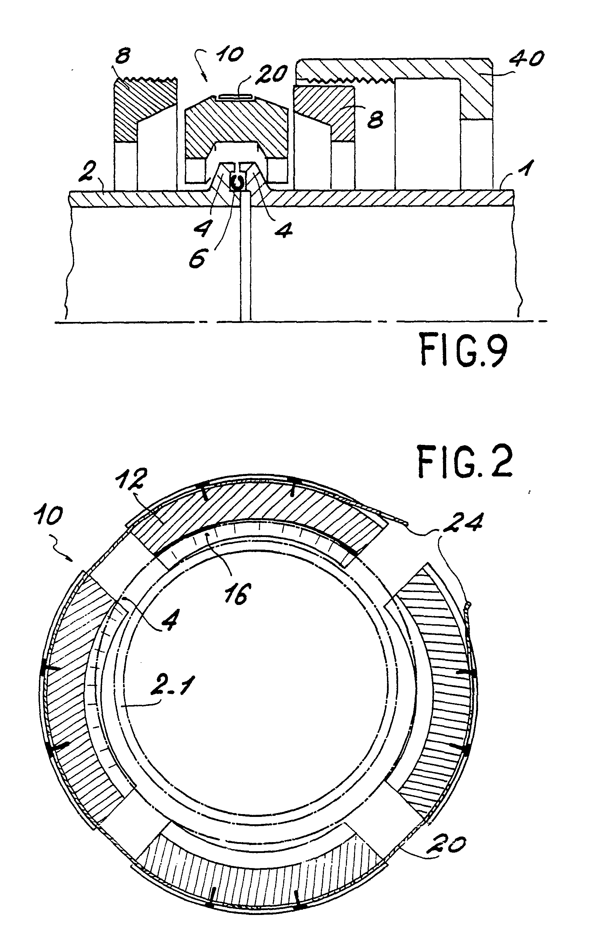

Les segments 12 de la couronne 10 sont reliés entre eux d'une manière qui permet l'extension et la rétraction des segments. Plusieurs réalisations sont possibles. Par exemple, sur la figure 1, les segments 12 sont reliés par une sangle souple 20 fixée à la surface périphérique extérieure des segments. La sangle 20 comporte un dispositif de fermeture 24 (voir figure 2). Lorsque la couronne 10 est en position rétractée, la sangle 20 ondule légèrement. La couronne 10 est également visible en vue latérale sur la figure 2. Elle est composée de quatre segments 12. On remarque la fixation de la sangle souple 20 sur chacun des segments et le dispositif de fermeture 24. La sangle peut faire saillie ou bien être encastrée dans une gorge pratiquée sur les segments, comme représenté sur les figures 1 et 2.

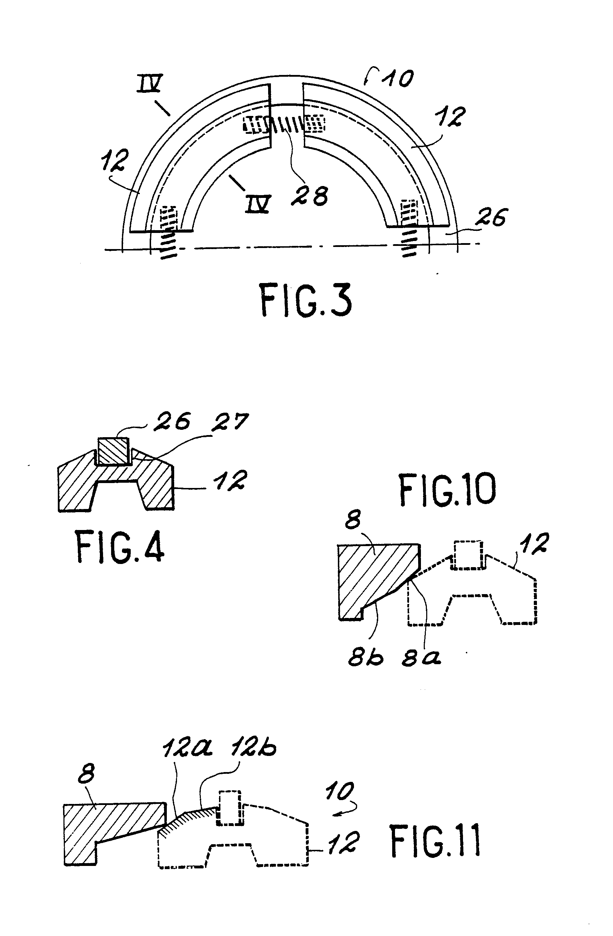

Selon une autre réalisation représentée sur la figure 3, les segments 12 sont montés sur une rondelle métallique 26 de diamètre approprié, engagée dans une gorge 27 pratiquée à la surface périphérique extérieure de chacun des segments 12. Les segments sont tenus écartés les uns des autres par des ressorts 28 emboîtés dans des logements prévus à cet effet dans les segments. Après serrage, le diamètre intérieur de la rondelle 26 reste inférieur au diamètre externe minimum de la couronne 10 afin que la rondelle 26 reste dans la gorge 27 pratiquée dans les segments. La figure 4 est une vue de détail qui montre la coupe d'un segment 12, la gorge pratiquée dans ce segment et la rondelle métallique 26.

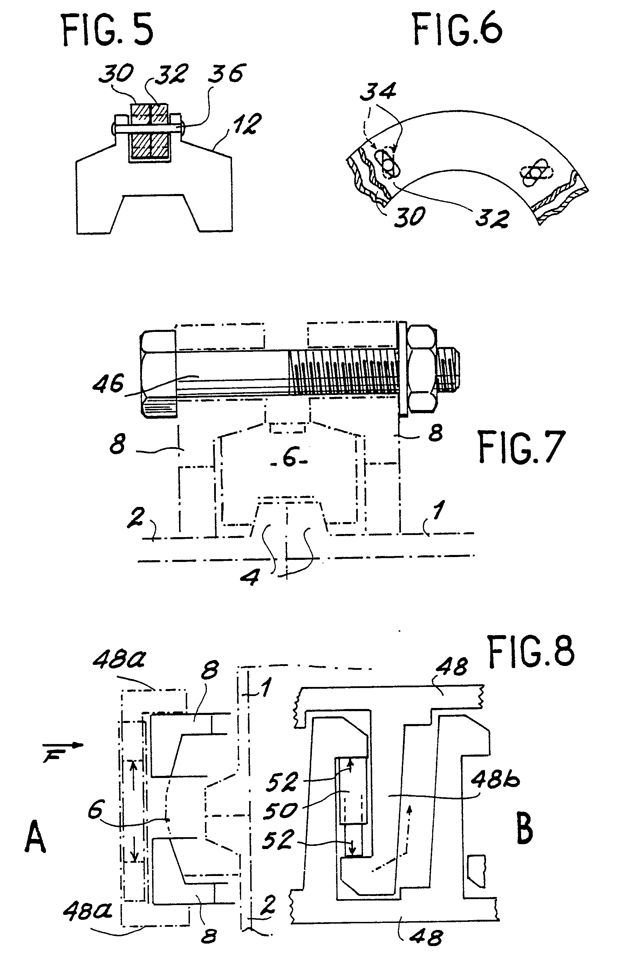

Selon une autre réalisation, représentée sur les figures 5 et 6, les segments sont reliés à deux couronnes 30 et 32. Ces couronnes sont logées dans une gorge pratiquée à la surface périphérique extérieure des segments 12. Elles comportent des rainures 34 au niveau de chaque segment. Par exemple, s'il y a quatre segments, chaque couronne comporte quatre rainures 34. Les rainures 34 pratiquées sur la couronne 30 sont radiales, tandis que celles pratiquées sur la couronne 32 sont inclinées, par exemple d'un angle de 45°. Un axe 36, constitué par exemple par un rivet, traverse les rainures 34. Il est fixé sur les segments 12. Lorsqu'on fait tourner manuellement la rondelle 30 par rapport à la rondelle 32, on imprime un mouvement radial aux segments, ce qui permet l'extension et la rétraction de la couronne 10. On peut ainsi augmenter son diamètre intérieur jusqu'à pouvoir la passer par-dessus les brides 4. Puis on imprime aux segments 12 un mouvement radial vers l'intérieur en faisant tourner les rondelles 30 et 32 en sens inverse de manière à faire entrer les surfaces coniques d'angle λ des segments et des flasques 4 en contact.

Comme on peut le voir sur la figure 1, le dispositif de raccordement de l'invention comporte des moyens de serrage qui permettent de rapprocher l'une de l'autre les brides de serrage 8. Sur la figure 1, ces moyens sont constitués par une pièce annulaire 40 comportant un flasque 42 qui prend appui sur l'une des brides 8 et coopère avec l'autre par un filetage 44 pratiqué sur une surface périphérique extérieure de la bride 8. Pour serrer les deux brides 8, on visse la pièce 40 sur la pièce 8.

On a représenté sur la figure 7 un autre moyen de serrage des brides 8. Les brides 8 comportent des ouvertures appropriées traversées par un boulon 46. En vissant le boulon 46, on rapproche les flasques 8 l'un de l'autre. On pourrait également resserrer les brides 8 au moyen de vérins exerçant des efforts opposés selon une direction parallèle à l'axe D sur les flancs des brides 8.

On a représenté sur la figure 8 un montage du type « en opposition » permettant de rapprocher les brides 8 l'une de l'autre au moyen de vérins. Il comporte deux pièces annulaires 48 identiques dont le diamètre interne est plus grand que le diamètre externe des brides 8. Chaque pièce 48 comporte des ergots 48a faisant saillie radialement vers l'intérieur de manière à prendre appui sur le flanc de l'une des brides 8. Les ergots de l'une des pièces prennent appui sur un flanc de l'une des brides tandis que les ergots de l'autre pièce 48 prennent appui sur un flanc de l'autre bride. En outre, chaque pièce annulaire 48 comporte une partie en forme de L 48b. Un vérin 50 prend appui sur la petite branche de la partie 48b. Le vérin 50 exerce un effort sur les parties extrêmes 48b des pièces annulaires disposées tête-bêche, de manière à les écarter l'une de l'autre. Ceci a pour effet de rapprocher l'un de l'autre les ergots 48a de chacune des pièces 48, et donc de serrer les brides 8.

La figure 9 illustre le montage d'un dispositif de raccordement conforme à l'invention. Les tuyauteries 1 et 2 étant emboîtées l'une dans l'autre, on écarte la couronne 10 jusqu'à son diamètre maximal. Dans cette position, le diamètre intérieur de la couronne est plus grand que le diamètre extérieur des flasques 4. On peut donc faire passer la couronne par-dessus ces flasques, puis la serrer manuellement. On positionne alors les deux flasques de serrage 8 de part et d'autre de la couronne 10. Enfin, on monte les moyens de serrage constitués, dans cet exemple de réalisation, par la pièce cylindrique 40.

Le fonctionnement du dispositif est le suivant. Lorsqu'on visse la bague filetée 40, on exerce sur chacune des brides une action de contact radiale

$$P = \frac{F}{tg\ (\mu + \varphi_1)}\ , \varphi_1$$

étant l'angle de frottement entre les surfaces coniques des brides et des segments 12.

A son tour, chaque segment 12 de la couronne exerce sur les surfaces coniques des brides 4 une action de contact Q parallèle à l'axe D.

$$Q = \frac{P}{tg\ (90 - \lambda + \varphi_2)},$$

$\varphi_2$ étant l'angle de frottement entre les surfaces coniques de la couronne intermédiaire 10 et du flasque 4.

La résultante R de l'action de contact longitudinale exercée sur les flasques est alors

$$R = \frac{F}{tg\ (\mu + \varphi_1) \cdot tg\ (90 - \lambda + \varphi_2)}$$

On donne ci-après un exemple de calcul numérique. Afin de simplifier les calculs, cet exemple sera donné dans le cas particulier où l'angle de frottement entre les surfaces coniques de la bride et de la couronne 10 est égal à l'angle de frottement entre les surfaces coniques des brides 8 et les surfaces coniques extérieures de la couronne. (Toutefois, il va de soi que l'invention ne se limite pas à ce cas particulier donné uniquement à titre d'exemple illustratif). Si 90-λ = μ = 15° et si le coefficient de frottement est égal à 0,1, ce qui correspond à un angle $\varphi_1 = \varphi_2 = 6°$, on obtient un coefficient mutiplicateur de l'effort égal à 7,14.

Si, pour les mêmes valeurs de λ et de μ, le coefficient de frottement est égal à 0,21 (ce qui correspond à un angle $\varphi_1 = \varphi_2 = 12°$), le coefficient de multiplication est de 3,85.

En outre, si le rapprochement total des brides (8) égal à (a) provoque un déplacement radial (b) de la couronne 10, b = a tgμ et le déplacement (b) de la couronne 10 provoque à son tour un rapprochement total (c) des deux flasques 4, c = a tgμ · tg (90-λ), soit, pour les valeurs de λ et μ indiquées précédemment, c = 1 mm et (a) voisin de 16 mm.

4

Ainsi, si le relâchement provoqué par la mise en tension du système de serrage après suppression de l'effort de fermeture est de 16 × 1/100 de mm, le délestage au niveau du joint sera seulement de 1/100 de mm, valeur qui est bien acceptée par le joint.

On a représenté sur les figures 10 et 11 des variantes de réalisation des surfaces coniques. Sur la figure 10, les surfaces coniques des brides 8 sont composées de deux cônes de même axe, mais d'angles de conicité différents. L'angle du cône 8a est plus important, ce qui permet un mouvement d'avance plus rapide du mouvement de serrage, mais réduit le coefficient multiplicateur. L'angle de conicité du cône 8b est plus faible, ce qui conduit à un coefficient de multiplication plus élevé et permet le serrage final.

Dans la variante représentée sur la figure 11, la surface conique de la couronne 10 est composée de deux surfaces coniques 12a et 12b de même axe mais d'angles de conicité différents. L'angle de la surface 12a est plus important et l'angle de la surface 12b est plus faible. Le fonctionnement est identique à ce qui a été expliqué en référence à la figure 10.

## Revendications

1. Dispositif de raccordement étanche d'une première tuyauterie (1) à une seconde tuyauterie (2) selon une direction D, chaque tuyauterie comprenant un flasque (4) et des moyens de serrage de ces flasques (4) afin de comprimer un joint (6) entre lesdites première et seconde tuyauteries, chaque flasque (4) présentant une surface conique d'axe D et d'angle λ, ces deux surfaces étant symétriques par rapport à un plan perpendiculaire à l'axe D, le dispositif comportant deux brides de serrage (8) présentant chacune une surface conique d'axe D et d'angle μ; et une couronne intermédiaire (10) extensible et rétractable radialement, possédant une surface périphérique intérieure et une surface périphérique extérieure, ladite surface périphérique intérieure comportant deux surfaces coniques d'axe D et d'angle λ symétriques par rapport à un plan perpendiculaire à l'axe D et aptes à coopérer avec les surfaces coniques d'axe D et d'angle λ desdites première et seconde tuyauteries, ladite surface périphérique extérieure présentant deux surfaces coniques d'axe D et d'angle μ symétriques par rapport à un plan perpendiculaire à l'axe D et aptes à coopérer avec les surfaces coniques d'angle μ de chacune des brides de serrage, ladite couronne (10) chevauchant les deux flasques selon leur direction radiale, caractérisé en ce que ladite couronne intermédiaire (10) est composée de plusieurs segments (12) reliés les uns aux autres, en ce que l'angle μ est tel que $tg(\mu + \varphi_1) < 1$, $\varphi_1$ étant l'angle de frottement entre les surfaces de la bride de serrage (8) et la couronne (10), en ce que l'angle λ est tel que $tg(90-\lambda + \varphi_2) < 1$, $\varphi_2$ étant l'angle de frottement entre la couronne (10) et le flasque (4), et en ce que $tg\mu \cdot tg(90-\lambda) < 1$.

2. Dispositif selon la revendication 1, caractérisé en ce que les moyens pour rapprocher les brides de serrage (8) l'une de l'autre sont constitués par une pièce annulaire (40) comportant un flasque (42) qui prend appui sur l'une des brides et qui coopère avec l'autre bride par un filetage (44) pratiqué sur une surface périphérique extérieure de ladite bride (40).

3. Dispositif selon la revendication 1, caractérisé en ce que les moyens pour rapprocher les brides de serrage (8) l'une de l'autre sont constitués par des boulons (46) traversant des passages appropriés formés dans les brides de serrage (8).

4. Dispositif selon la revendication 1, caractérisé en ce que les moyens pour rapprocher les brides de serrage l'une de l'autre sont constitués par des vérins (50).

5. Dispositif selon la revendication 1, caractérisé en ce que les segments (12) dont est constituée la couronne (10) sont reliés par une sangle souple (20) fixée aux segments et comportant un dispositif de fermeture (24).

6. Dispositif selon l'une quelconque des revendications 1 à 4, caractérisé en ce que les segments (12) dont est constituée la couronne (10) sont reliés l'un à l'autre par des ressorts (28) fixés dans des logements prévus sur les segments, et par une rondelle (26) logée dans une gorge (27).

7. Dispositif selon l'une quelconque des revendications 1 à 6, caractérisé en ce que les segments (12) dont est constituée la couronne (10) sont constitués par deux couronnes (30, 32), une première couronne (30) présentant des rainures radiales (34) au niveau de chaque segment et une deuxième couronne présentant des rainures inclinées (34) au niveau de chaque segment (12), les première et seconde couronnes (30, 32) étant disposées côte à côte dans une gorge pratiquée dans la surface périphérique extérieure des segments, chaque segment comportant un axe (36) traversant les rainures de chacune des couronnes (30, 32).

8. Dispositif selon l'une quelconque des revendications 1 à 7, caractérisé en ce que l'une au moins des surfaces coniques pratiquées sur les brides de serrage (8) et sur les surfaces périphériques extérieures des segments (12) de la couronne (10) est constituée de deux cônes d'angles différents (8a, 8b ; 12a, 12b).

## Claims

1. Device for the tight connection of a first pipe to a second pipe in a direction D, each pipe having a flange (4) and means for locking these flanges (4) in order to compress a joint (6) between the said first and second pipes, each flange (4) having a conical surface of axis D and angle $\lambda$, the two surfaces being symmetrical relative to a plane perpendicular to axis D, the device having two clips (8), each having a conical surface of axis D and angle $\mu$, and a radially extensible and retractable intermediate ring (10), having a peripheral inner surface and a peripheral outer surface, said an inner peripheral surface having two conical surfaces of axis D and angle $\lambda$ symmetrical relative to a plane perpendicular to axis D and able to cooperate with the conical surfaces of angle $\mu$ of each of the clips, said ring (10) overlapping the two flanges in the radial direction thereof, characterized in that said intermediate ring (10) is constituted by several interconnected segments (12), in that the angle $\mu$ is such that $tg(\mu + \varphi_1) < 1$, $\varphi_1$ being the friction angle between the surfaces of clip (8) and ring (10), in that the angle $\lambda$ is such that $tg(90-\lambda + \varphi_2) < 1$, $\varphi_2$ being the friction angle between ring (10) and flange (4) and in that $tg\mu \cdot tg(90-\lambda) < 1$.

2. Device according to claim 1, characterized in that the means for bringing together the clips (8) are constituted by an annular member (40) having a flange (42) which bears on one of the clips and which cooperates with the other clip by means of a thread (44) made on the outer peripheral surface of the same (40).

3. Device according to claim 1, characterized in that the means for bringing together the clips (8) are constituted by bolts (46), which pass through appropriate passages formed in the clips (8).

4. Device according to claim 1, characterized in that the means for bringing together the clips are constituted by jacks (50).

5. Device according to claim 1, characterized in that the segments (12) forming the ring (10) are connected by a flexible strap (20) fixed to the segments and having a closing device (24).

6. Device according to any one of the claims 1 to 4, characterized in that the segments (12) forming the ring (10) are connected to one another by springs (28), fixed in recesses provided on the segments, and by a washer (26) located in a groove (27).

7. Device according to any one of the claims 1 to 6, characterized in that the segments (12) forming the ring (10) are constituted by two rings (30, 32), a first ring (30) having radial slots (34) in each segment and a second ring having inclined slots (34) on each segment (12), the first and second rings (30, 32) being juxtaposed in a groove made in the outer peripherical surface of the segments, each segment having a spindle (36) passing through the slots of each of the rings (30, 32).

8. Device according to any one the claims 1 to 7, characterized in that at least one of the conical surfaces made on the clips (8) and on the outer peripheral surfaces of the segments (12) of the ring (10) is constituted by two cones having different angles (8a, 8b ; 12a, 12b).

**Patentansprüche**

1. Vorrichtung zur dichten Verbindung einer ersten Leitung (1) mit einer zweiten Leitung (2) in einer Richtung D, wobei jede Leitung einen Flansch (4) aufweist und eine Klemmanordnung für diese Flansche (4), um eine Dichtung (6) zwischen der ersten und der zweiten Leitung einzuklemmen, wobei jeder Flansch (4) eine konische Fläche zur Achse D und einen Winkel $\lambda$ aufweist und diese beiden Flächen symmetrisch zu einer Ebene senkrecht zur Achse D sind, mit zwei Klemmstücken (8), deren jedes eine konische Fläche zur Achse D und einen Winkel $\mu$ aufweist und mit einem radial aus- und einziehbaren Zwischenring (10), welcher eine innere und eine äußere Umfangsfläche aufweist, wobei die innere Umfangsfläche zwei konische Flächen zur Achse D mit dem Winkel $\lambda$ aufweist, die bezüglich einer zur Achse D senkrechten Ebene symmetrisch sind und die mit den konischen Flächen zur Achse D mit dem Winkel $\lambda$ der beiden Leitungen zusammenwirken und wobei die äußere Umfangsfläche zwei konische Flächen zur Achse D mit dem Winkel $\mu$ aufweist, die symmetrisch bezüglich einer zur Achse D senkrechten Ebene sind und die mit den konischen Flächen mit dem Winkel $\mu$ eines jeden der Klemmstücke zusammenwirken, wobei der Ring (10) die beiden Flansche in deren Radialrichtung überlappt, dadurch gekennzeichnet, daß sich der Zwischenring (10) aus mehreren miteinander verbundenen Abschnitten (12) zusammensetzt, daß der Winkel $\mu$ so gewählt ist, daß $tg(\mu + \varphi_1) < 1$ ist, wobei $\varphi_1$ der Reibungswinkel zwischen den Flächen der Klemmstücke (8) und dem Ring (10) ist, daß der Winkel $\lambda$ so gewählt ist, daß $tg(90-\lambda + \varphi_2) < 1$ ist, wobei $\varphi_2$ der Reibungswinkel zwischen dem Ring (10) und dem Flansch (4) ist und daß $tg\mu \cdot tg(90-\lambda) < 1$ ist.

2. Vorrichtung nach Anspruch 1, dadurch gekennzeichnet, daß die Anordnung zum Verbinden der beiden Klemmstücke (8) miteinander aus einem ringförmigen Teil (40) besteht, das einen Flansch (42) aufweist, der sich auf einem der Stücke abstützt und mit dem anderen Stück mittels eines Gewindes (44) zusammenwirkt, das auf einer äußeren Umfangsfläche des Teils (40) ausgebildet ist.

3. Vorrichtung nach Anspruch 1, dadurch gekennzeichnet, daß die Anordnung zum Verbinden der Klemmstücke (8) miteinander aus Bolzen (46) besteht, die geeignete Öffnungen in den Klemmstücken (8) durchsetzen.

4. Vorrichtung nach Anspruch 1, dadurch gekennzeichnet, daß die Anordnung zum Verbinden der Klemmstücke miteinander aus Druckzylindern (50) besteht.

5. Vorrichtung nach Anspruch 1, dadurch gekennzeichnet, daß die Abschnitte (12), aus denen sich der Ring (10) zusammensetzt, mittels eines weichen Bandes (20) miteinander verbunden sind und ein Schließteil (24) aufweisen.

6. Vorrichtung nach einem der Ansprüche 1 bis 4, dadurch gekennzeichnet, daß die Abschnitte (12), aus denen sich der Ring (10) zusammensetzt, miteinander über Federn (28) verbunden sind, die in Aussparungen befestigt sind, welche in den Abschnitten vorgesehen sind sowie über einen in einer Nut (27) sitzenden Ring (26).

7. Vorrichtung nach einem der Ansprüche 1 bis 6, dadurch gekennzeichnet, daß die Abschnitte (12), aus denen sich der Ring (10) zusammensetzt, aus zwei Ringen (30, 32) bestehen, wobei ein erster Ring (30) radiale Nuten (34) auf Höhe eines jeden Abschnittes aufweist und ein zweiter Ring geneigte Nuten (34) auf Höhe eines jeden Abschnittes (12) aufweist, wobei der erste und der zweite Ring (30, 32) nebeneinander in einer Nut angeordnet sind, die in der äußeren Umfangsfläche der Abschnitte vorgesehen ist, und jeder Abschnitt eine Achse (36) aufweist, welche die Nuten einer jeden der Ringe (30, 32) durchsetzt.

8. Vorrichtung nach einem der Ansprüche 1 bis 7, dadurch gekennzeichnet, daß wenigstens eine der an den Klemmstücken (8) und auf den äußeren Umfangsflächen der Abschnitte (12) des Ringes (10) vorgesehenen konischen Flächen aus zwei Schräglächen unterschiedlicher Winkel (8a, 8b ; 12a, 12b) besteht.

# FIG.1

# FIG. 1a

# FIG. 1b

FIG.9

FIG.2

FIG.3

FIG.4

FIG.10

FIG.11

# FIG. 5

# FIG.6

# FIG.7

# FIG.8